# EUROPÄISCHE PATENTSCHRIFT

(11) **EP 0 566 008 B1**
(45) Veröffentlichungstag und Bekanntmachung des Hinweises auf die Patenterteilung: **07.02.1996**
(21) Anmeldenummer: 93105709.5
(22) Anmeldetag: 06.04.1993
(51) Int. Cl.: F16D 65/56

(54) **Druckluftbetätigte Scheibenbremse**
Air operated disc brake
Frein à disque actionné par air comprimé

(30) Priorität: 13.04.1992 DE 4212405
(43) Veröffentlichungstag der Anmeldung: 20.10.1993
(73) Patentinhaber: KNORR-BREMSE SYSTEME FÜR NUTZFAHRZEUGE GmbH, D-80809 München (DE)
(72) Erfinder: Baumgartner, Hans, W-8052 Moosburg (DE); Trimpe, Robert, W-8000 München 50 (DE); Schullerus, Otto, W-8000 München 40 (DE)
(74) Vertreter: KUHNEN, WACKER & PARTNER

(56) Entgegenhaltungen:
- DE-A- 2 341 781
- DE-A- 4 034 165

## Beschreibung

Die Erfindung bezieht sich auf eine druckluftbetätigte Scheibenbremse gemäß dem Oberbegriff des Anspruchs 1, die insbesondere für Straßenfahrzeuge und vorzugsweise für Nutzfahrzeuge vorgesehen ist.

Druckluftbetätigte bzw. pneumatische Scheibenbremsen der gattungsgemäßen Art sind beispielsweise aus der DE-OS 37 16 202 sowie aus der nicht vorveröffentlichten DE-OS 40 32 885 bekannt. Bei diesen bekannten Scheibenbremsen wird eine Bremsscheibe von einem in Axialrichtung verschiebbar gelagerten Bremssattel umfaßt, wobei auf einer Seite des Bremssattels eine druckluftbetätigte Zuspannvorrichtung angeordnet ist, bei deren Betätigung eine auf dieser Seite der Bremsscheibe befindliche Bremsbacke gegen diese gedrückt wird, worauf sich der Bremssattel aufgrund der Reaktionskräfte in Gegenrichtung verschiebt und dadurch eine auf der gegenüberliegenden Seite befindliche Bremsbacke gleichfalls an die Bremsscheibe andrückt.

Die Zuspannvorrichtung weist bei diesen bekannten Scheibenbremsen als Betätigungsorgan einen Drehhebel auf, der um eine zur Ebene der Bremsscheibe parallel verlaufende Drehachse schwenkbar gelagert ist. Der Drehhebel liegt hierbei auf seiner der Bremsscheibe zugewandten Seite mittels eines Exzenters etwa längsmittig an einer sich parallel zur Drehachse erstreckenden Traverse an, die bezüglich der Bremsscheibe verschiebbar geführt ist und in der mindestens eine ein Außengewinde aufweisende Stellspindel in einem jeweils zugeordneten Innengewinde der Traverse verstellbar verschraubt ist, wobei die Stellspindel über ein an ihrem bremsscheibenseitigen Ende sitzendes Druckstück auf die zuspannseitig im Bremssattel bezüglich der Bremsscheibe verschiebbar gelagerte Bremsbacke einwirkt.

Um das Lüftspiel, d.h. den Abstand der Bremsbacken zur Bremsscheibe im unbetätigten Zustand unter Ausgleich der sich durch Abrieb ändernden Belagstärke konstant zu halten, ist eine Nachstelleinrichtung vorgesehen, die mit der Stellspindel drehfest gekoppelt ist und bei jeder Betätigung des Drehhebels die Stellspindel dann um einen bestimmten Winkel dreht, wenn die Bremsbacke nach Überwindung des Soll-Lüftspiels noch nicht an der Bremsscheibe anliegt. Zu diesem Zweck weist die Nachstelleinrichtung als funktionswesentliche Teile u.a. einen Freilauf sowie eine Rutschkupplung auf. Zu näheren Einzelheiten des Aufbaus einer derartigen Nachstelleinrichtung wird im übrigen auf die DE-OS 40 34 165 verwiesen und vollinhaltlich bezug genommen.

Wenn der Bremsbelag weitgehend abgerieben ist, ist zum Vermeiden eines Bremsenausfalls ein neuer Bremsbelag einzubauen, wozu der Wartungstechniker die Stellspindel(n) wieder in ihre Ausgangslage zurückbringen muß, um ausreichend Platz für den neuen Bremsbelag zu schaffen. Um diesen Rückstellvorgang möglichst einfach zu gestalten, weist die Nachstelleinrichtung an ihrem bremsscheibenabgewandten Ende einen Drehkopf beispielsweise in Form eines Sechskants auf, der mittels eines geeigneten Steckschlüssels ein entsprechendes Drehen der Nachstelleinrichtung (und damit der mit dieser gekoppelten Stellspindel) entgegen der Nachstellrichtung ermöglicht.

Hierbei besteht jedoch die Gefahr, daß der Wartungstechniker auch dann noch dreht, wenn die Stellspindel bereits ihren Endanschlag erreicht hat. In diesem Fall wird die Drehung der Stellspindel gehemmt, wodurch zwischen der Stellspindel und der mit ihr drehfest gekoppelten Nachstelleinrichtung ein starkes Moment aufgebaut wird, das ohne weiteres ausreicht, die empfindlichen Funktionsteile der Nachstelleinrichtung zu zerstören. Diese Beschädigung der Nachstelleinrichtung wird jedoch nicht ohne weiteres bemerkt, so daß die Gefahr besteht, daß der Wartungstechniker den Belagwechsel ohne Austausch der beschädigten Nachstelleinrichtung zu Ende führt. Ein Bremsversagen ist in diesem Fall nicht vermeidbar.

Der Erfindung liegt die Aufgabe zugrunde, eine druckluftbetätigte Scheibenbremse gemäß dem Oberbegriff des Anspruchs 1 derart weiterzubilden, daß ein durch eine unsachgemäße Durchführung des Belagwechsels bedingtes Bremsversagen weitgehend vermieden werden kann.

Diese Aufgabe wird erfindungsgemäß mit den im Kennzeichnungsteil des Anspruchs 1 angegebenen Maßnahmen gelöst.

Hierdurch wird erreicht, daß im eingangs genannten Fall einer übermäßigen Betätigung des Drehkopfs der Kraftschluß zu den Funktionselementen der Nachstelleinrichtung unterbrochen wird, so daß eine Beschädigung derselben sicher vermieden wird. Die Funktionssicherheit der Bremse ist daher bei einer solch unsachgemäßen Handhabung selbst dann nicht in Frage gestellt, wenn der Wartungstechniker das Ansprechen der Trenneinrichtung nicht registriert. Lediglich der nachfolgende Belagwechsel ist insoweit erschwert, als das Zurückdrehen der Stellspindeln nunmehr mit wesentlich mehr Aufwand verbunden ist.

Damit beim Ansprechen der erfindungsgemäßen Trenneinrichtung keine Reparatur erforderlich, ist es möglich, diese vermittels einer Rutschkupplung auszubilden.

Gemäß einer Weiterbildung der Erfindung ist vorgesehen, daß bei einer Scheibenbremse, bei der der Momentenübertragungsweg durch eine mit dem Drehkopf gebildete Welle gebildet ist, die Trenneinrichtung in dem sich an den Drehkopf anschließenden Bereich der Welle als Einkerbung derselben ausgebildet wird. Diese Ausgestaltung der Trenneinrichtung ist insbesondere bei einer als Einkerbung ausgebildeten Sollbruchstelle mit wenig Aufwand zu realisieren und erlaubt zudem eine sehr exakte Einstellung des gewünschten Grenz-Drehmoments, das selbstverständlich unter Berücksichtigung der maximalen Belastbarkeit der Funktionselemente der Nachstelleinrichtung gewählt wird.

Die Erfindung wird nachstehend anhand der Beschreibung von Ausführungsbeispielen unter Bezugnahme auf die Zeichnung näher erläutert. Es zeigen:
Fig. 1 anhand eines Querschnitts den schematischen Aufbau der Zuspannvorrichtung;
Fig. 2 einen Längsschnitt der in Fig. 1 gezeigten Zuspannvorrichtung; und
Fig. 3 ein vergrößertes Detail der Fig.2 zur Erläuterung der Funktionsweise der Sollbruchstelle.

Um die der Erfindung zugrundeliegende Problematik zu verdeutlichen, sollen zunächst der prinzipielle Aufbau und die Wirkungsweise der gattungsgemäßen Scheibenbremse und deren Zuspannvorrichtung näher erläutert werden. Obgleich die gezeigte Ausführungsform der Zuspannvorrichtung zwei Spindeln aufweist, sei darauf hingewiesen, daß die Erfindung selbstverständlich auch bei einer einspindeligen Zuspannvorrichtung verwendbar ist.

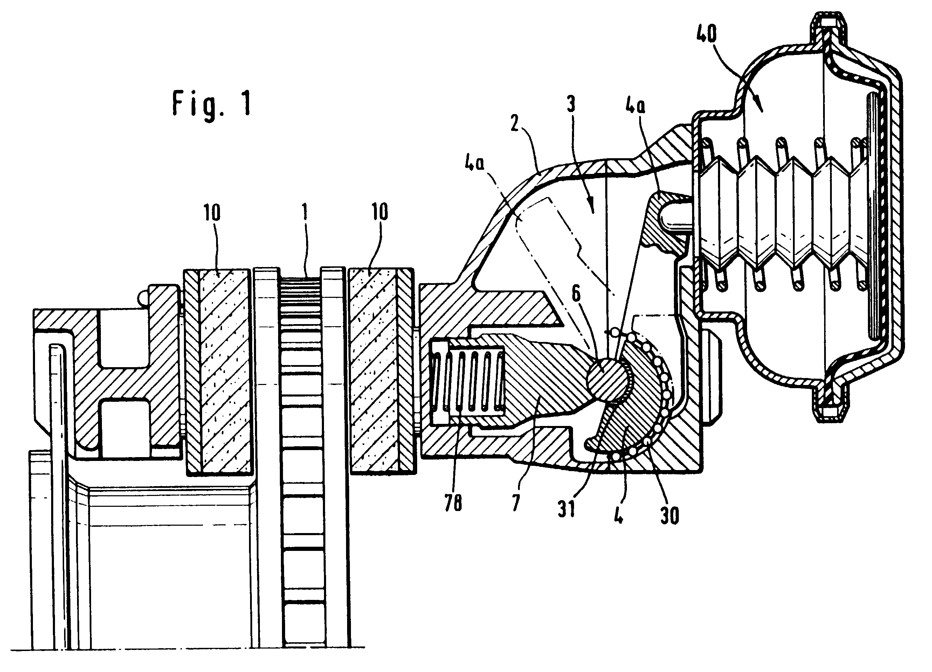

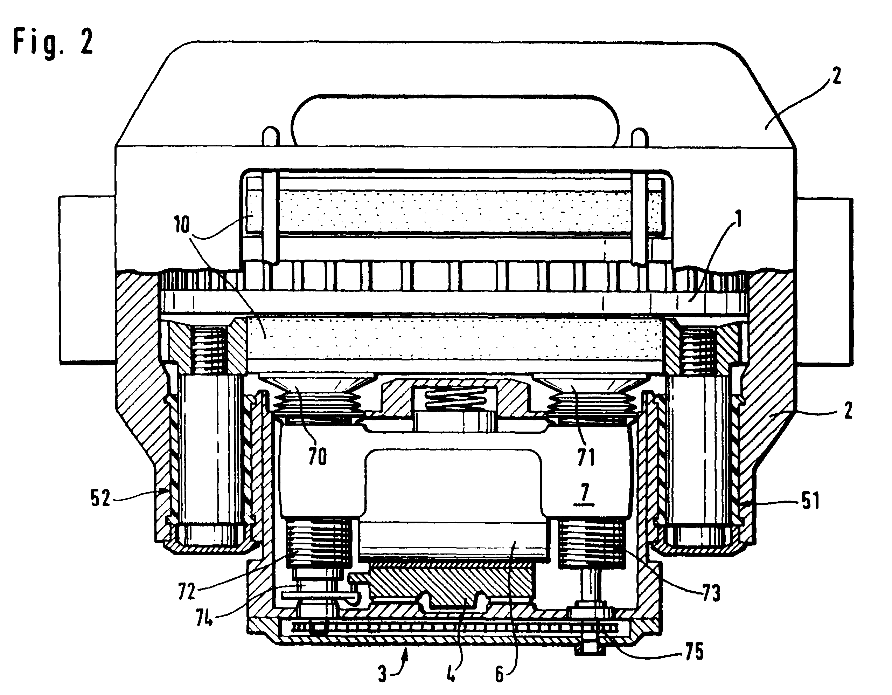

Wie aus den Figuren 1 und 2 zu erkennen ist, wird eine (innenbelüftete) Bremsscheibe 1, die an einer nicht näher bezeichneten Achse eines Nutzfahrzeugs befestigt ist, von einem Bremssattel 2 umfaßt. Der Bremssattel 2 ist gemäß Fig. 2 mittels eines starren Führungslagers 52 sowie mittels eines Ausgleichslagers 51 in axialer Verschiebbarkeit bezüglich der Bremsscheibe 1 am Fahrzeug gelagert. Im übrigen sind Aufbau und Funktion des Bremssattels bekannt, so daß sich eine nähere Erläuterung erübrigt.

Auf der in Fig. 1 rechten bzw. der in Fig. 2 unteren Seite der Bremsscheibe 1 ist eine schematisch mit dem Bezugszeichen 3 bezeichnete (zweispindelige) Zuspannvorrichtung angeordnet. Im Bremssattel 2 ist ein im wesentlichen halbkreisförmiges Drehlager 30 vorgesehen, dessen Drehachse parallel zur Ebene der Bremsscheibe 1 verläuft und das den entsprechend abgerundeten Bereich eines Drehhebels 4 aufnimmt, so daß der Drehhebel 4 parallel zur Ebene der Bremsscheibe 1 verschwenkt werden kann. Zur Betätigung des Drehhebels 4 ist ein lediglich schematisch dargestellter Bremszylinder 40 vorgesehen, der mit einem Kolben in eine geeignet geformte Ausnehmung eines Betätigungsarms 4a des Drehhebels 4 eingreift. Wenn der Bremszylinder 40 mit der Druckluft beaufschlagt wird, wird der Betätigungsarm 4a des Drehhebels 4 folglich von seiner Ruheposition in die in Fig. 1 in gestrichelter Darstellung angedeutete Position bewegt. Es sei angemerkt, daß die Betätigung des Drehhebels 4 selbstverständlich auch über ein Bremsgestänge erfolgen kann, so daß der Bremszylinder 40 gegebenenfalls an einem anderen Ort plaziert werden kann, falls der verfügbare Einbauraum für die Scheibenbremse bzw. deren Zuspannvorrichtung begrenzt ist.

Die dem halbschalenförmigen Drehlager 30 abgewandte Seite des Drehhebels 4 ist über einen als Nocken dienenden Exzenter 6 mit einer Traverse 7 gekoppelt, die sich innerhalb des Bremssattels 2 im wesentlichen parallel zur Drehachse der Bremsscheibe 1 erstreckt und in dieser Ebene verschiebbar gelagert ist. An ihrem der Bremsscheibe 1 zugewandten Ende weist die Traverse 7 eine sacklochartige Ausnehmung auf, die von einem in Richtung zur Bremsscheibe 1 auskragenden, rohrartigen Ansatz umgeben ist. Dieser Ansatz der Traverse 7 ist in einer entsprechenden Ausnehmung des Bremssattels 2 rechtwinklig zur Ebene der Bremsscheibe 1 unter Beibehaltung eines derartigen Spiels schiebegelagert, daß die Traverse 7 geringfügige Schwenkbewegungen in der Zeichnungsebene ausführen kann. Innerhalb der Ausnehmung ist eine Spiralfeder 78 angeordnet, die zwischen die Traverse 7 und das der Bremsscheibe 1 zugewandte Ende des Bremssattels 2 eingespannt ist und dadurch die Traverse 7 zum Drehhebel 4 hin vorspannt.

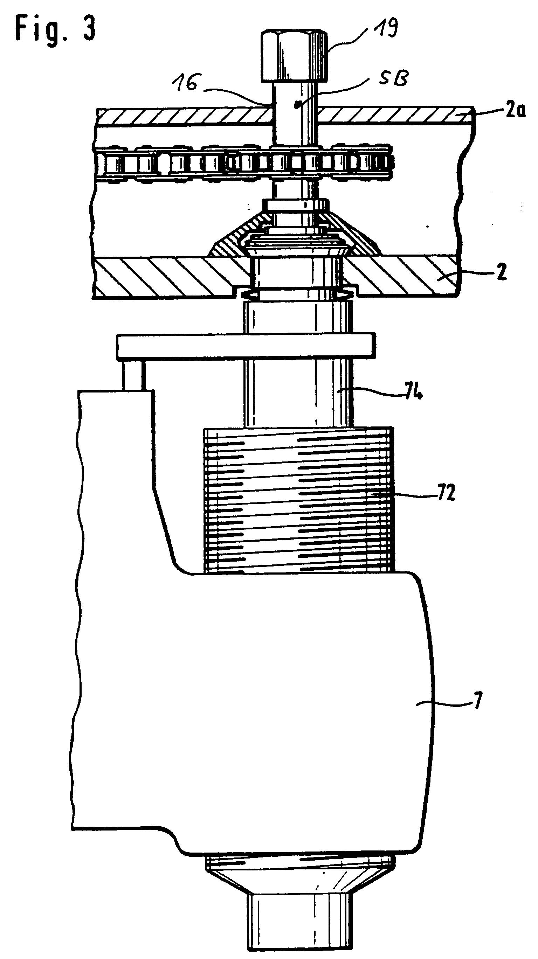

Wie insbesondere dem Längsschnitt der Fig. 2 entnehmbar ist, weist die Traverse 7 an beiden Seiten jeweils eine mit einem Innengewinde versehene Bohrung auf, in der jeweils eine Stellspindel 72 bzw. 73 justierbar verschraubt ist, deren in Fig.3 mit 711 bezeichnetes Außengewinde in einem entsprechend geformten Innengewinde der Traverse 7 geführt ist. An dem der Bremsscheibe 1 zugewandten Ende jeder der Stellspindeln 72 und 73 ist ein sich kegelförmig verbreiterndes Druckstück 70 bzw. 71 befestigt. Da sich die beiden Stellspindeln 72 und 73 infolge ihrer Anordnung in der Traverse 7 senkrecht zur Ebene der Bremsscheibe 1 erstrecken, liegen die Druckstücke 70 und 71 mit ihren flachen Enden an einer Bremsbacke 10 an. Die Bremsbacke 10 ist insbesondere in Umfangsrichtung zur Bremsscheibe 1 über nicht gezeigte Halterungen quer zur Bremsscheibe 1 verschiebbar geführt, wobei die Halterungen entweder dem Bremssattel 2 oder einem Bremsträger zugeordnet sein können.

Im Inneren der Stellspindel 72 ist eine Nachstelleinrichtung 74 angeordnet, die infolge einer Axialverzahnung drehfest mit der Stellspindel 72 gekoppelt und in axialer Richtung verschiebbar ist. Die Nachstelleinrichtung 74 wird bei jeder Betätigung des Drehhebels 4 um einen bestimmten Winkelbetrag gedreht, wodurch ein kontinuierliches Nachstellen der Bremse gewährleistet ist. In eine entsprechende Axialverzahnung der gegenüberliegenden Stellspindel 73 greift ein Zahnrad ein, das über eine Welle mit einer Synchronisationseinrichtung 75 gekoppelt ist, die das innenliegende Zahnrad und damit die Spindel 73 synchron mit der Nachstelleinrichtung 74 dreht. Hierdurch wird erreicht, daß das Druckstück 71 synchron mit dem Druckstück 70 nachgestellt wird.

Bei einer einspindeligen Ausführungsform der Traverse 7, die demzufolge lediglich eine einzige Stellspindel und damit nur ein Druckstück aufweist, wird die Stellspindel beispielsweise in der Mitte der Traverse 7 angeordnet, während der Exzenter 6 sowie die die Druckfeder aufweisende Lagerung der Traverse 7 jeweils in zweifacher Ausfertigung auf beiden Seiten der zentralen Stellspindel vorgesehen sind.

Wie insbesondere aus der Fig.3 zu erkennen ist, weist die Nachstelleinrichtung 74 an ihrem oberen, d.h. bremsscheibenabgewandten Ende einen Drehkopf in Form eines Sechskants 19 auf; dieser ist über eine Welle 16 so mit den lediglich schematisch angedeuteten inneren Funktionselementen gekoppelt, daß ein Drehen des Sechskants in Gegen-Zuspannrichtung dazu führt, daß sich die Stellspindel in Fig.3 nach oben in ihre Ausgangslage zurückbewegt, so daß eine neue Bremsbacke 10 eingebaut werden kann.

Nachfolgend wird das Arbeitsprinzip der erfindungsgemäßen Zuspanneinrichtung kurz erläutert. Bei Druckluftbeaufschlagung des Bremszylinders 40 wird der Betätigungsarm 4a gemäß Fig. 1 nach links verschwenkt, wodurch der am Drehhebel 4 wirkende Exzenter 6 um eine entsprechend den Hebelgesetzen verringerte Strecke gleichfalls nach links verschoben wird.

Die Traverse 7 wird daher entgegen der Vorspannkraft einer Schraubenfeder 78 um diese Wegstrecke zur Bremsscheibe 1 hin gedrückt. Die an der Traverse 7 über die Stellspindeln 72 und 73 befestigten Druckstücke 70 bzw. 71 drücken folglich unter Überwindung des Lüftspiels (das in der Praxis ca. 0,4 mm beträgt) die Bremsbacke 10 gegen die Bremsscheibe 1. Wenn der Betätigungsarm 4a weiter nach links verschwenkt wird, verschiebt sich der Bremssattel aufgrund der auf die Bremsscheibe 1 ausgeübten Kraft in Fig. 1 nach rechts, so daß schließlich auch die linke Bremsbacke 10 gegen die Bremsscheibe 1 gepreßt wird.

Falls ein zu großes Lüftspiel vorliegt, was beispielsweise bei zunehmendem Verschleiß der Bremsbacken 10 der Fall ist, sorgt die Nachstelleinrichtung 74 dafür, daß sich die Stellspindeln 72 und 73 solange drehen, bis das Lüftspiel seinen Sollwert erreicht. Auf diese Weise ist gewährleistet, daß die Scheibenbremse bis zum vollständigen Abrieb der Bremsbacken 10 funktionsfähig bleibt.

Bei vollständigem Abrieb der Bremsbacken 10 muß ein Belagwechsel vorgenommen werden, in dessen Verlauf, wie bereits erläutert, die Stellspindeln 72 und 73 in ihre Ausgangslage zurückgebracht werden müssen. Zu diesem Zweck dreht die Wartungsperson den Sechskant 19 unter Zuhilfenahme eines Steckschlüssels oder dergleichen solange, bis die Stellspindeln 72 und 73 so weit eingefahren sind, daß genügend Platz für das Einsetzen des neuen Bremsbelags vorhanden ist. Wenn die Wartungsperson hierbei nicht aufmerksam ist, können die Stellspindeln 72 und 73 bis in ihre bremsscheibenabgewandte Grenzposition gelangen, in der ihre Drehung gehemmt wird, wodurch zwischen den Stellspindel und der mit ihr drehfest gekoppelten Nachstelleinrichtung ein starkes Moment aufgebaut wird; wenn dieses Moment einen durch eine in Fig.3 gezeigte, in einer den Sechskant 19 mit den Funktionselementen verbindenden Welle 16 ausgebildete Trenneinrichtung in Form einer Sollbruchstelle SB vorgegebenen Grenzwert übersteigt, bricht die Welle 16 an der Sollbruchstelle SB, so daß eine Zerstörung der für den sicheren Betrieb der Bremse notwendigen Teile sicher verhindert werden kann. Die Sollbruchstelle SB kann auf einfache Weise mittels einer Einkerbung der Welle oder eine andere Materialschwächung hergestellt werden.

Wie aus Fig.3 zu erkennen ist, ist die Sollbruchstelle SB bei der gezeigten Ausführungsform zweckmäßig noch außerhalb der Gehäuseabdeckung der Zuspannvorrichtung 3 angeordnet; hierdurch ist gewährleistet, daß sämtliche für den Betrieb der Bremse notwendigen Teile wie insbesondere auch eine Gliederkette der Snychronisationseinrichtung 75 trotz des Ansprechens der Sollbruchstelle SB weiterhin korrekt betätigt werden.

Falls die beim nächsten Belagwechsel aufgrund des Ansprechens der Sollbruchstelle SB bzw. des daraus resultierenden Bruchs der Welle erforderlich werdende Reparatur der Nachstelleinrichtung 74 verhindert werden soll, ist es möglich, die Trenneinrichtung als Rutschkupplung auszubilden, die bei einem vorgegebenen Drehmoment anspricht.

Bei der erläuterten Ausführungsform der Zuspannvorrichtung 3 erfolgt die Kraftübersetzung mittels eines drehbar gelagerten Hebels 4, der über einen Exzenter auf eine Traverse 7 einwirkt; das Prinzip der Erfindung ist jedoch selbstverständlich auch bei anderen Zuspannvorrichtungen verwendbar, etwa bei solchen, bei denen die Kraftübersetzung mittels eines Spreizkeils oder einer Kugelrampe erfolgt. Ebenso ist die Erfindung nicht auf die gezeigten Ausführungsformen von Stellspindel und Nachstelleinrichtung beschränkt; die Trenneinrichtung kann vielmehr bei allen Stellelementen verwendet werden, deren axiale Relativlage zur Bremsscheibe mit zunehmendem Belagverschleiß von einer geeigneten Antriebseinrichtung verändert wird.

## Patentansprüche

1. Druckluftbetätigte Scheibenbremse mit einem eine Bremsscheibe *(1)* umfassenden Bremssattel *(2),* auf dessen einer Seite eine Zuspannvorrichtung *(3)* angeordnet ist, die über mindestens eine Stellspindel *(72,* 73) und ein an derem bremsscheibenseitigen Ende sitzendes Druckstück *(70, 71)* auf eine zuspannseitig im Bremssattel *(2)* bezüglich der Bremsscheibe *(1)* verschiebbar gelagerte Bremsbacke *(10)* einwirkt, wobei eine mit der Stellspindel *(72, 73)* drehfest gekoppelte Nachstelleinrichtung *(74)* das sich infolge Belagverschleiß ändernde Lüftspiel im wesentlichen konstant hält und an ihrem bremsscheibenabgewandten Ende einen Drehkopf *(19)* aufweist, mittels dem die Stellspindel *(72, 73)* in ihre Ausgangslage zurückbringbar ist,
*dadurch gekennzeichnet,*
daß innerhalb desjenigen Momentenübertragungswegs, über den der Drehkopf *(19)* das auf ihn ausgeübte Drehmoment auf die Nachstelleinrichtung *(74)* überträgt, eine zum Schutz der Nachstelleinrichtung *(74)* bei einem bestimmten Grenz-Drehmoment ansprechende Trenneinrichtung *(SB)* vorgesehen ist, wobei die Lage der Trenneinrichtung *(SB)* im Momentenübertragungsweg so gewählt ist, daß sie sich außerhalb der bremsscheibenabgewandten äußeren lagerung der Nachstelleinrichtung *(74)* befindet.

2. Druckluftbetätigte Scheibenbremse nach Anspruch 1, *dadurch gekennzeichnet,* daß die Trenneinrichtung als eine Sollbruchstelle *(SB)* ausgebildet ist.

3. Druckluftbetätigte Scheibenbremse nach Anspruch 1, *dadurch gekennzeichnet,* daß die Trenneinrichtung als eine Rutschkupplung *(SB)* ausgebildet ist.

4. Druckluftbetätigte Scheibenbremse nach einem der Ansprüche 1 bis 3, bei der der Momentenübertragungsweg durch eine mit dem Drehkopf *(19)* verbundene Welle *(16)* gebildet ist, *dadurch gekennzeichnet,* daß die Trenneinrichtung *(SB)* in dem sich an den Drehkopf *(19)* anschließenden Bereich der Welle *(16)* ausgebildet ist.

5. Druckluftbetätigte Scheibenbremse nach Anspruch 4, soweit dieser auf Anspruch 2 zurückbezogen ist, *dadurch gekennzeichnet,* daß die Sollbruchstelle *(SB)* durch eine Einkerbung der Welle *(16)* gebildet ist.

## Claims

1. Compressed-air disk brake which comprises a caliper *(2)* encompassing a brake disk *(1)*, with application means *(3)* positioned on one side of said caliper acting on a brake pad *(10)* mounted in said caliper *(2)* on the side of application such as to be movable relative to said brake disk *(1)* through at least one actuating spindle *(72, 73)* and a thrust member *(70, 71)* mounted at the end thereof which faces the brake disk, wherein an adjusting means *(74)* coupled in a rotationally fixed manner to said actuating spindle *(72, 73)* maintains the clearance liable to vary due to lining wear essentially constant and comprises at the one end thereof facing away from said brake disk a rotating head *(19)* enabling said actuating spindle *(72, 73)* to be returned to its home position,
*characterized in that*
a disconnecting means *(SB)* protecting said adjusting means *(74)* by responding at a predetermined maximum torque is provided within the torque transfer path along which said rotating head *(19)* transmits the torque applied to it to said adjusting means *(74)*, with the position of said disconnecting means *(SB)* within the torque transfer path being selected such as to be on the outside of the outer bearing located beyond said adjusting means *(74)* when viewed from said brake disk.

2. Compressed-air disk brake in accordance with claim 1, *characterized in that* said disconnecting means is a rated break point *(SB).*

3. Compressed-air disk brake in accordance with claim 1, *characterized in that* said disconnecting means is a friction clutch *(SB).*

4. Compressed-air disk brake in accordance with any one of claims 1 to 3 wherein the torque transfer path is constituted by a shaft *(16)* connected to said rotating head *(19), characterized in that* said disconnecting means (SB) is disposed in the area of said shaft *(16)* adjacent to said rotating head *(19)*.

5. Compressed-air disk brake in accordance with claim 4 where referred to claim 2, *characterized in that* said rated break point *(SB)* is a notch provided in said shaft *(16).*

## Revendications

1. Frein à disque actionné par air comprimé comportant un étrier de frein enserrant un disque de frein (1), sur le côté duquel un dispositif de serrage (3) est disposé qui agit moyennant au moins une broche de réglage (72, 73) et une pièce de pression (70, 71) logée sur l'extrémité côté disque de frein de la broche de réglage sur une mâchoire de frein (10) logée de manière à pouvoir être déplacée par rapport au disque de frein (1) dans l'étrier de frein (2) côté serrage, un dispositif de réglage (74), en maintenant de manière substantiellement constante la distance entre la mâchoire et le disque de frein changeant à la suite de l'usure des garnitures de frein et présente à son extrémité détournée du disque de frein une tête pivotante (19) moyennant laquelle la broche de réglage (72, 73) est ramenée dans sa position de départ,
caractérisé en ce que
à l'intérieur de la course de transmission du couple moyennant la tête pivotante (19) qui transmet le couple de rotation exercé sur elle sur le dispositif de réglage (74), un dispositif de séparation (SB) est prévu pour protéger le dispositif de réglage (74) réagissant à un couple de rotation limite déterminé, la position du dispositif de séparation (SB) étant choisie dans la course de transmission du couple de manière à se trouver en dehors du palier extérieur détourné du disque de frein du dispositif du réglage (74).

2. Frein à disque actionné par air comprimé selon la revendication 1, caractérisé en ce que le dispositif de séparation est formé comme point de rupture préprogrammé (SB).

3. Frein à disque actionné par air comprimé selon la revendication 1, caractérisé en ce que le dispositif de séparation est formé comme embrayage à glissement (SB).

4. Frein à disque actionné par air comprimé selon l'une quelconque des revendications 1 à 3, dans lequel la course de transmission du couple est formée par un arbre (16) relié à la tête pivotante (19), caractérisé en ce que le dispositif de séparation (SB) est formé dans la zone de l'arbre (16) suivant en aval la tête de pivotement (19).

5. Frein à disque actionné par air comprimé selon la revendication 4, pour autant que celui-ci est rapporté à la revendication 2, caractérisé en ce que le point de rupture préprogrammé (SB) est formé par une encoche dans l'arbre (16).
